# EUROPÄISCHE PATENTSCHRIFT

(11) **EP 1 704 988 B1**
(45) Veröffentlichungstag und Bekanntmachung des Hinweises auf die Patenterteilung: **05.03.2008**
(21) Anmeldenummer: 05026442.3
(22) Anmeldetag: 05.12.2005
(51) Int. Cl.: B29C 67/00, B29C 57/00

(54) **Verfahren zum Umkrempeln eines Schlauchendes nach innen**
Process for everting inwardly a tube at its end
Procédé pour retourner vers l'intérieur la paroi d'un tube à son extrémité

(30) Priorität: 26.03.2005 DE 102005013945
(43) Veröffentlichungstag der Anmeldung: 27.09.2006
(73) Patentinhaber: FRIMO Group GmbH, 49504 Lotte (DE)
(72) Erfinder: Schwarze, Bernd, Dr.-Ing., 49565 Bramsche (DE)
(74) Vertreter: Moldenhauer, Herbert

(56) Entgegenhaltungen:
- DE-A1- 19 750 959
- PATENT ABSTRACTS OF JAPAN Bd. 006, Nr. 086 (M-131), 25. Mai 1982 (1982-05-25) & JP 57 024215 A (KINUGAWA RUBBER IND CO LTD), 8. Februar 1982 (1982-02-08)

## Beschreibung

### Technisches Gebiet

Die Erfindung betrifft ein Verfahren zum Umkrempeln eines Schlauchendes nach innen, bei dem die Wandung des Schlauchendes mit Hilfe eines Zylinderkremplers eingestülpt und in die Gestalt eines S-förmigen Profils mit einem radial innenliegenden Schenkel überführt wird und bei dem der Schenkel zur Erzeugung eines U-förmigen Profils der Wandung nachfolgend mit Hilfe des Zylinderkremplers 4 gestreckt wird.

### Stand der Technik

Ein solches Verfahren ist aus der DE 197 50 959 A1 bekannt. Es gelangt zur Anwendung, um die Wandstärke eines metallischen Auspuffrohrs zu verdoppeln. Dazu wird ein zylindrischer Endabschnitt des Auspuffrohrs zunächst in radialer Richtung plastisch verkleinert auf einen Außendurchmesser, der deutlich kleiner ist, als der Innendurchmesser des übrigen Auspuffrohrs, um einen Endabschnitt mit einem Außendurchmesser zu erhalten, der deutlich kleiner ist als der Innendurchmesser des übrigen Auspuffrohrs. Nachfolgend wird der solcherart in seinem Außendurchmesser verminderte Endabschnitt axial verlagert in das Auspuffrohr, wobei das Profil seiner Wandung über eine temporäre S-Form schließlich in die Form eines U-förmigen Profils überführt wird.

Für bestimmte Anwendungen ist es erforderlich, elastisch aufblähbare Schläuche mit zumindest einem nach innen eingestülpten Schlauchende zur Verfügung zu haben, das ein U-förmiges Profil aufweist mit Stegen, die sich parallel zu einander und zur Längsrichtung des Schlauches erstrecken. Üblicher Weise werden derartige Einstülpungen manuell erzeugt, was vor allem bei kleinen Durchmessern von weniger als 20 mm zeitraubend und unfallträchtig ist. Außerdem ist die Qualität der erhaltenen Einstülpung schwierig kontrollierbar, insbesondere die Länge des in das Innere des Schlauches eingreifenden Schenkels des Profils. Das eingangs erwähnte Verfahren ist dabei nicht anwendbar, weil elastische Schläuche nicht plastisch verformbar sind.

### Darstellung der Erfindung

Der Erfindung liegt die Aufgabe zu Grunde, ein Verfahren der eingangs genannten Art derart weiter zu entwickeln, dass solche Einstülpungen in vorherbestimmbarer Qualität auch bei elastischen Schläuchen und bei Schtauchdurchmessern von weniger als 20 mm schnell und gefahrlos herstellbar sind.

Diese Aufgabe wird erfindungsgemäß mit einem Verfahren nach Anspruch 1 gelöst. Auf vorteilhafte Ausgestaltungen nehmen die Unteransprüche Bezug. Bei dem erfindungsgemäßen Verfahren ist es vorgesehen, dass das Schlauchende vor dem Einstülpen in einem Abstand X von der Stirnfläche der Tülle durch eine Klemmvorrichtung dichtend abgeklemmt und in dem abgedichteten Abschnitt durch Einspeisung eines druckbeaufschlagten Strömungsmittels aus einer Druckbeaufschlagungseinrichtung elastisch aufgebläht wird auf einen Innendurchmesser D, der größer ist als der Außendurchmesser der Führungshülse, dass das Schlauchende beim Einstülpen in den elastisch aufgeblähten Bereich verlagert und nachfolgend darin gestreckt wird und dass der Druck des eingespeisten Strömungsmittels entspannt, der Boden des U-förmigen Profils durch die Stirnfläche eines Zylinderanschlages abgestützt und der Zylinderkrempler und die Tülle aus dem eingestülpten Schlauchende zurückgezogen und die Klemmvorrichtung geöffnet wird.

Die in Schlauchlängsrichtung gemessene Länge des S-förmigen Profils ist etwa halb so groß wie die sich in Schlauchlängsrichtung erstreckende Länge des radial innenliegenden Schenkels des U-förmigen Profils. Abweichungen können in Abhängigkeit von dem Verformungsverhalten des umzustülpenden Schlauches sinnvoll oder erforderlich sein.

Die Weglängen, die von den einzelnen Teilen der verwendeten Vorrichtung bei der Anwendung des erfindungsgemäßen Verfahrens hierzu überwunden werden müssen, lassen sich durch einfache Versuche ermitteln und nachfolgend kalibrieren, wodurch gewährleistet ist, dass eine jede erhaltene Einstülpung eines Schlauchendes von der gewünschten Qualität ist und dass der in das Innere eingreifende Schenkel des Profils von vorherbestimmbarer und exakter Länge ist. Für viele Anwendungen ist dieses eine wichtige Voraussetzung.

Um zu verhindern, dass es bei der Aufblähung des abgedichteten Bereichs des Schlauchendes zu unkontrollierten Deformationen kommt, hat es sich als vorteilhaft bewährt, den bereffenden Bereich mit einem unnachgiebigen Halterohr zu umschließen und dadurch zugleich abzustützen.

Das druckbeaufschlagbare Strömungsmittel wird zweckmäßig durch die Tülle eingespeist und dadurch abgelassen. Die Klemmvorrichtung kann dadurch besonders einfach gestaltet sein und beispielsweise aus zwei sich parallel zu einander erstreckenden Spannbacken bestehen, die an die einander gegenüberliegenden Seiten des Schlauchendes angelegt und anschließend soweit zusammendrückbar sind, dass das Innere des Schlauchendes soweit abgedichtet ist, dass das nachfolgend eingespeiste Strömungsmittel nicht mehr entweichen und für eine elastische Aufblähung des Schlauchendes genutzt werden kann. Zweckmäßig wird Druckluft zum Aufblähen verwendet.

Die Klemmvorrichtung, die Tülle, der Zylinderkrempler, die Führungshülse, der Zylinderanschlag und die Druckbeaufschlagungseinrichtung werden zweckmäßig im Rahmen einer automatisierten Schrittfolge betätigt. Bedienungsfehler können dadurch nicht mehr auftreten und zu einem unbefriedigenden Einstülpungsergebnis führen.

Das erfindungsgemäße Verfahren kann zur Einstülpung von elastisch dehnbaren Schlauchenden eines beliebigen Durchmessers verwendet werden. Es ist sehr einfach und völlig unfallsicher anwendbar.

Die Erfindung wird nachfolgend an Hand der in der Anlage beigefügten Zeichnung weiter verdeutlicht.

Es zeigen:

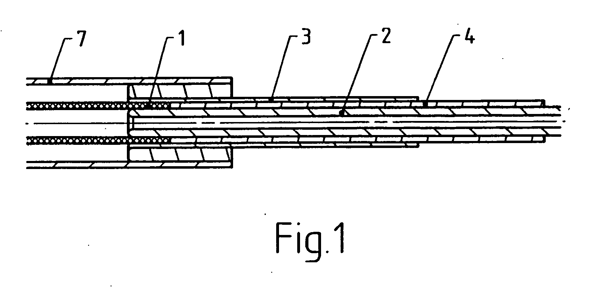

Fig. 1 das Einschieben des Schlauchendes in den Zwischenraum zwischen der Führungshülse und der Tülle bis zum Anliegen an dem Zylinderkrempler

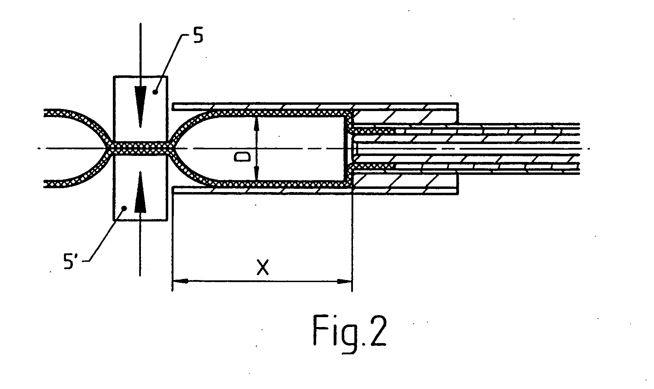

Fig. 2 das Abklemmen und radiale Aufblähen des Schlauchendes in dem Bereich zwischen der Tülle und einer Klemmvorrichtung bis zum Anliegen am Innenumfang des unnachgiebigen Halterohres

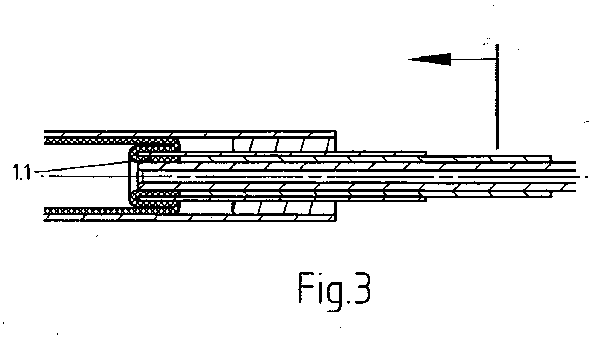

Fig. 3 die Umformung des vorstehenden Schlauchendes mit Hilfe der Tülle und des Zylinderkremplers zu einem S-förmigen Profil durch längsgerichtetes Vorschieben des Schlauchendes mit Hilfe des Zylinderkremplers, der Tülle und der Führungshülse in den radial erweiterten Abschnitt des Schlauchendes

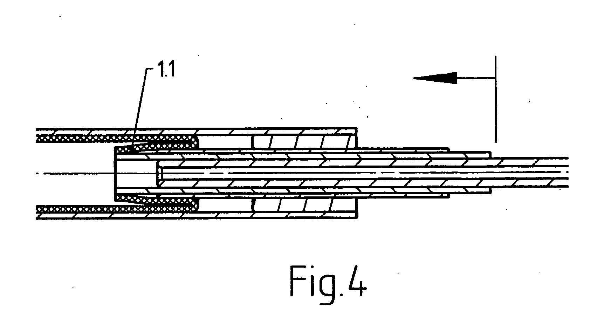

Fig. 4 die Umformung des S-förmigen Profils des Schlauchendes zu einem U-förmigen Profil durch längsgerichtetes Vorschieben des Zylinderkremplers

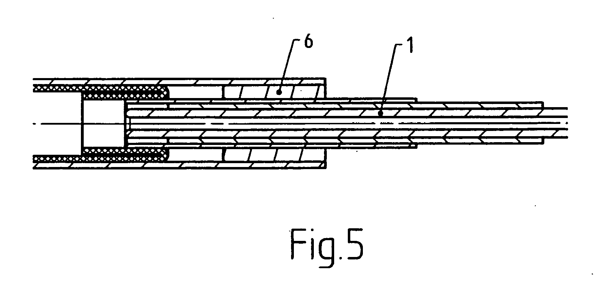

Fig. 5 das Zurückziehen des Zylinderkremplers aus dem vorstehenden Teil des U-förmigen Profils

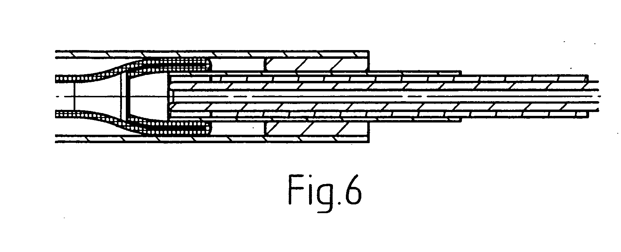

Fig. 6 das Ablassen des druckbeaufschlagten Strömungsmittels aus dem Schlauchende, das, so weit freiliegend, seinen ursprünglichen Durchmesser wieder annimmt

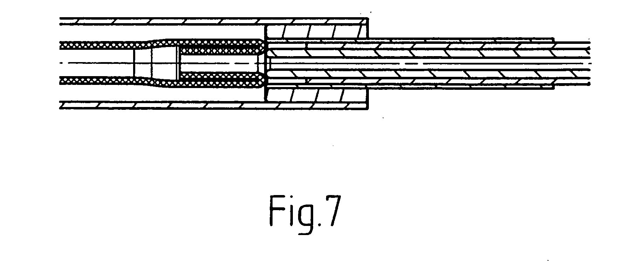

Fig. 7 das Zurückziehen des eingestülpten Schlauchendes bis zum Zylinderabstreifer

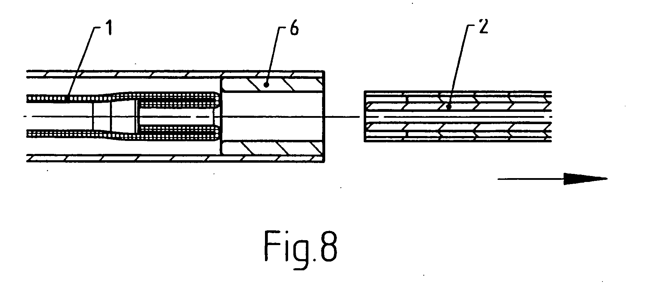

Fig. 8 das Herausziehen der Tülle und des Zylinderkremplers aus dem eingestülpten Schlauchende

Das Verfahren wird nachfolgend nochmals im Einzelnen erläutert:

Das Verfahren dient zum Umkrempeln eines Schlauchendes 1 eines elastischen Schlauches nach innen, beispielsweise eines solchen aus Gummi mit einem Außendurchmesser von 5 bis 30 mm. Dabei wird das Schlauchende 1 in den Zwischenraum zwischen einer Tülle 2 und einer die Tülle 1 in radialem Abstand umschließenden Führungshülse 3 eingeführt und an die Stirnfläche eines darin längsverschiebbar gelagerten Zylinderkremplers 4 angelegt. Sodann wird das Schlauchende 1 in einem Abstand X von der Stirnfläche der Tülle 2 durch eine Klemmvorrichtung 5, 5' dichtend abgeklemmt und in dem abgedichteten Abschnitt durch Einspeisung eines druckbeaufschlagten Strömungsmittels, beispielsweise von Druckluft aus einer Druckbeaufschlagungseinrichtung, radial aufgebläht auf einen Innendurchmesser D, der größer ist als der Außendurchmesser der Führungshülse 3. Im nächstfolgenden Arbeitsschritt wird das Schlauchende 1 mit Hilfe der Tülle 2, der Führungshülse 3 und des Zylinderkremplers 4 in Längsrichtung derart in den radial aufgeblähten Bereich verlagert, dass sich die Schlauchwandung 1 zu einem S-förmigen Profil aufstaucht und verformt. Das S-förmige Profil wird nachfolgend durch Abschieben seines radial innenliegenden Schenkels 1.1 von der Tülle 2 und dessen Streckung mit Hilfe des Zylinderkremplers 4 zu einem U-förmigen Profil umgeformt. Damit hat das Schlauchende die Grundform einer mit einer nach innen weisenden Einstülpung versehenen Ausführung erhalten. Es ist somit nur noch erforderlich, das Schlauchende aus der Vorrichtung zu entfernen. Dazu ist es vorgesehen, den Druck des eingespeisten Strömungsmittels zu entspannen, den Boden des U-förmigen Profils durch die Stirnfläche eines Zylinderanschlages 6 abzustützen, den Zylinderkrempler 4 und die Tülle 2 aus dem eingestülpten Schlauchende 1 zurückzuziehen und die Klemmvorrichtung zu öffnen. In Abhängigkeit von der Qualität, insbesondere der Elastizität und dem Verformungsverhalten des Schlauchendes können der Zylinderkrempler und die Tülle gegebenenfalls auch dem innenliegenden, gestreckten Schenkel 1.1. des Profils zurückziehbar sein, ohne dass der Zylinderanschlag 6 den Boden des U-förmigen Profils berührt. Die Berührung des Zylinderanschlags 6 während dieses Verfahrensschrittes ist insofern keine in jedem Falle unverzichtbare Bedingung für eine erfolgreiche Anwendung des erfindungsgemäßen Verfahrens.

Um eine Beschädigung des Schlauches während des Aufblähprozesses zu vermeiden und dennoch eine ausreichende, kontrollierte Aufblähung in radialer Richtung sicher zustellen hat es sich als vorteilhaft bewährt, wenn das Schlauchende 1 zumindest im aufgeblähten Zustand von einem unnachgiebigen Halterohr 7 umschlossen und dadurch abgestützt wird. Das Schlauchende wird dadurch vorübergehend in einem definierten Maß auf den erforderlichen, größeren Durchmesser aufgeweitet, der für die nachfolgenden Verfahrensschritte und insbesondere das Einstülpen des Schlauchendes in das Innere unverzichtbar ist.

Das Verfahren lässt sich besonders einfach durchführen, wenn das druckbeaufschlagbare Strömungsmittel, beispielsweise Druckluft, durch die Tülle 2 eingespeist und dadurch auch abgelassen wird.

Die Klemmvorrichtung 5, 5', die Tülle 2, der Zylinderkrempler 4, die Führungshülse 3, der Zylinderanschlag 5 und die Druckbeaufschlagungseinrichtung können im Rahmen einer automatisierten Schrittfolge betätigt werden, um den Arbeitsablauf zu beschleunigen und Bedienungsfehler zu vermeiden.

## Patentansprüche

1. Verfahren zum Umkrempeln eines Schlauchendes (1) nach innen, bei dem die Wandung des Schlauchendes (1) mit Hilfe eines Zylinderkremplers (4) eingestülpt und in die Gestalt eines S-förmigen Profils mit einem radial innenliegenden Schenkel (1.1) überführt wird und bei dem der Schenkel (1.1) zur Erzeugung eines U-förmigen Profils der Wandung nachfolgend mit Hilfe des Zylinderkremplers (4) gestreckt wird, **dadurch gekennzeichnet, dass** das Schlauchende in den Zwischenraum zwischen einer Tülle (2) und einer die Tülle (2) in radialem Abstand umschließenden Führungshülse (3) eingeführt wird und das Schlauchende (1) vor dem Einstülpen in einem Abstand X von der Stirnfläche der Tülle (2) durch eine Klemmvorrichtung (5, 5') dichtend abgeklemmt und in dem abgedichteten Abschnitt durch Einspeisung eines druckbeaufschlagten Strömungsmittels aus einer Druckbeaufschlagungseinrichtung elastisch aufgebläht wird auf einen Innendurchmesser D, der größer ist als der Außendurchmesser der Führungshülse (3), dass das Schlauchende (1.1) beim Einstülpen in den elastisch aufgeblähten Bereich verlagert und nachfolgend darin gestreckt wird und dass der Druck des eingespeisten Strömungsmittels entspannt, der Boden des U-förmigen Profils durch die Stirnfläche eines Zylinderanschlages (6) abgestützt und der Zylinderkrempler (4) und die Tülle (2) aus dem eingestülpten Schlauchende (1) zurückgezogen und die Klemmvorrichtung geöffnet wird.

2. Verfahren nach Anspruch 1, **dadurch gekennzeichnet, dass** das Schlauchende (1) zumindest im aufgeblähten Zustand von einem unnachgiebigen Halterohr (7) umschlossen und abgestützt wird.

3. Verfahren nach Anspruch 1 oder 2, **dadurch gekennzeichnet, dass** das druckbeaufschlagbare Strömungsmittel durch die Tülle (2) eingespeist und abgelassen wird.

4. Verfahren nach einem der Ansprüche 1 bis 3, **dadurch gekennzeichnet, dass** die Klemmvorrichtung (5, 5'), die Tülle (2), der Zylinderkrempler (4), die Führungshülse (3), der Zylinderanschlag (5) und der Druckbeaufschlagungseinrichtung im Rahmen einer automatisierten Schrittfolge betätigt werden.

## Claims

1. A process for inwardly everting an end of a tube (1), in which the wall of the end of the tube (1) is turned in with the aid of a cylinder everter (4) and transformed into an S-shaped profile with a radially inner limb (1.1) and in which the limb (1.1) is subsequently extended with the aid of the cylinder everter (4) to produce a U-shaped profile of the wall, **characterized in that** the end of the tube is introduced into the intermediate space between a nozzle (2) and a guiding sleeve (3) enclosing the nozzle (2) with a radial spacing, and the end of the tube (1) is clamped off in a sealing manner by a clamping device (5, 5') at a distance X from the end face of the nozzle (2) before the turning in and is elastically inflated to an inside diameter D which is greater than the outside diameter of the guiding sleeve (3) in the sealed portion by feeding in a pressurized flowing agent from a pressurizing device, **in that** the end of the tube (1.1) is moved into the elastically inflated region during the turning in and is subsequently extended therein and **in that** the pressure of the fed-in flowing agent is relieved, the bottom of the U-shaped profile is supported by the end face of a cylinder stop (6) and the cylinder everter (4) and the nozzle (2) are withdrawn from the turned-in end of the tube (1) and the clamping device is opened.

2. A process according to claim 1, **characterized in that**, at least in the inflated state, the end of the tube (1) is enclosed and supported by an unyielding retaining tube (7).

3. A process according to claim 1 or 2, **characterized in that** the flowing agent that can be pressurized is fed in and let out through the nozzle (2).

4. A process according to any one of claims 1 to 3, **characterized in that** the clamping device (5, 5'), the nozzle (2), the cylinder everter (4), the guiding sleeve (3), the cylinder stop (5) and the pressurizing device are actuated in the course of an automated step sequence.

## Revendications

1. Procédé pour retourner une extrémité de tuyau (1) vers l'intérieur, dans lequel la paroi de l'extrémité de tuyau (1) est retournée à l'intérieur à l'aide d'un crampon à cylindre (4) et est transformée sous la forme d'un profilé en S ayant un côté (1.1) radialement intérieur, et dans lequel le côté (1.1) est ensuite étiré à l'aide du crampon à cylindre (4) pour former un profilé en U de la paroi, **caractérisé en ce que** l'extrémité du tuyau est introduite dans l'espace intermédiaire entre une douille (2) et un manchon de guidage (3) entourant la douille (2) à écart radial, et **en ce que** l'extrémité du tuyau (1), avant d'être retournée, est pressée de manière étanche à un écart X de la surface frontale de la douille (2) au moyen d'un dispositif de serrage (5, 5') et est gonflée de manière élastique dans la section étanchéifiée, par alimentation d'un moyen d'écoulement, mis sous pression, provenant d'un dispositif de mise sous pression, pour obtenir un diamètre intérieur D qui est plus grand que le diamètre extérieur du manchon de guidage (3), **en ce que** l'extrémité du tuyau (1.1), lorsqu'elle est retournée, est déplacée dans la section gonflée élastiquement, et y est ensuite étirée et **en ce que** la pression du moyen d'écoulement alimenté est détendue, **en ce que** le fond du profilé en U est supporté par la surface frontale d'une butée de cylindre (6) et **en ce que** le crampon à cylindre (4) et la douille (2) sont retirés de l'extrémité de tuyau (1) retournée et **en ce que** le dispositif de serrage est ouvert.

2. Procédé selon la revendication 1, **caractérisé en ce que** l'extrémité de tuyau (1), au moins à l'état gonflé, est entourée et supportée par un tube de maintien (7) rigide.

3. Procédé selon la revendication 1 ou 2, **caractérisé en ce que** le moyen d'écoulement, pouvant être mis sous pression, est alimenté et vidé au moyen de la douille (2).

4. Procédé selon l'une quelconque des revendications 1 à 3, **caractérisé en ce que** le dispositif de serrage (5, 5'), la douille (2), le crampon à cylindre (4), le manchon de guidage (3), la butée de cylindre (5) et le dispositif de mise sous pression sont actionnés dans le cadre d'une séquence d'étapes automatisée.
